# EUROPÄISCHE PATENTANMELDUNG

(11) **EP 2 581 192 A1**
(43) Veröffentlichungstag der Anmeldung: **17.04.2013**
(21) Anmeldenummer: 11185224.0
(22) Anmeldetag: 14.10.2011
(51) Int. Cl.: B29C 43/24, B21B 37/60, D21G 1/00

(54) **Walzenstuhlung**

(71) Anmelder: Reifenhäuser GmbH & Co. KG Maschinenfabrik, 53844 Troisdorf (DE)
(72) Erfinder: Böhm, Andreas, 53842 Troisdorf (DE); Meyer, Helmut, 53842 Troisdorf (DE)
(74) Vertreter: Wagner, Matthias

(57) **Zusammenfassung**

Die Erfindung betrifft eine Wafzenstuhlung (1), umfassend mindestens zwei Walzen (2,3,15), zwischen denen ein Walzenspalt ausbildbar ist, wobei die Walzen endseitig in Lagern (5-8,18,19) drehbar gelagert sind und mindestens eine der Walzen als Zustellwalze (2,15) ausgeführt ist und ein Verstellsystem (9) aufweist, mittels dessen die Lager der Zustellwalze unter Veränderung des Walzenspaltes verlagerbar sind, wobei das Verstellsystem eine Zahnstange (10) sowie ein mit dieser zusammenwirkendes Ritzel (11) aufweist, welches über einen Motor (12) antreibbar ist.

## Beschreibung

Die vorliegende Erfindung betrifft eine Walzenstuhlung, umfassend mindestens zwei Walzen, zwischen denen ein Walzenspalt ausbildbar ist, wobei die Walzen endseitig in Lagern drehbar gelagert sind und mindestens eine der Walzen als Zustellwalze ausgeführt ist und ein Verstellsystem aufweist, mittels dessen die Lager der Zustellwalze unter Veränderung des Walzenspaltes verlagerbar sind.

Derartige Walzenstuhlungen werden beispielsweise bei der Herstellung von Kunststofffolien und -platten eingesetzt. Ein typisches Anwendungsbeispiel sind sogenannte Glättwerke, in welchen eine in einem Extrusionsprozess gebildete Schmelze nach dem Austritt aus einem Breitschlitzwerkzeug durch einen einstellbaren Glättspalt zwischen zwei Walzen hindurchgeführt wird. Die Schmelze wird dabei abgekühlt und derart geformt, dass eine Folienbahn mit einheitlicher Dicke sowie mit einem homogenen Erscheinungsbild über die gesamte Folienfläche entsteht. Derartige sogenannte Glättwerksfolien werden beispielsweise aus Polystyrol, Polypropylen oder Polyester gefertigt und finden eine breite Verwendung unter anderem beim Transport und Schutz von Nahrungsmitteln sowie in der Automobilindustrie.

Ein Glättwerk umfasst in der Regel mindestens zwei Walzen, von denen eine Walze ortsfest und mindestens eine weitere Walze als Zustellwalze ausgeführt ist. Diese Zustellwalze ist über ein Verstellsystem verlagerbar, so dass unterschiedliche Glättspalteinstellungen zwischen der ortsfesten und der verstellbaren Walze realisierbar sind. Auf diese Weise können Folien unterschiedlicher Stärke hergestellt werden.

Bekannte Glättwerke sind dabei üblicherweise mit einem hydraulischen Verstellsystem ausgestattet, welches verschiedene Nachteile aufweist. So führt die hierbei zum Einsatz kommende Hydraulikflüssigkeit, in der Regel Öl, bei Leckagen zu Kontaminationen der Folienbahnen und macht diese unbrauchbar. Auch ist der Einsatz der regelmäßig auszutauschenden Hydrauliklösung vergleichsweise teuer und der Platzbedarf einer entsprechenden Vorrichtung ist relativ groß. Schließlich lassen sich hydraulische Systeme häufig nicht mit der hier notwendigen Genauigkeit steuern, so dass zur Bestimmung des eingestellten Glättspaltes und gegebenenfalls zu dessen Nachregelung aufwendige zusätzliche Messeinrichtungen eingesetzt werden müssen.

Aufgabe der vorliegenden Erfindung ist die Bereitstellung einer Walzenstuhlung, durch welche die beschriebenen Nachteile des Standes der Technik überwunden werden.

Diese Aufgabe wird gelöst durch eine Walzenstuhlung mit den Merkmalen des Patentanspruchs 1.

Vorteilhafte Ausgestaltungen und Weiterbildungen der Erfindung sind Gegenstand der Unteransprüche.

Die Erfindung sieht vor, dass das der Einstellung des Walzenspaltes dienende Verstellsystem eine Zahnstange sowie ein mit dieser zusammenwirkendes Ritzel aufweist, welches über einen Motor antreibbar ist.

Mit anderen Worten liegt der Kerngedanke der vorliegenden Erfindung darin, das bislang zur Walzenzustellung verwendete Hydrauliksystem durch ein elektromechanisches System zu ersetzen. Derartige Systeme sind in ihrer erfindungsgemäß vorgesehenen Ausführung mit Zahnstange und Ritzel im Hinblick auf eine exakte Positionierung herkömmlichen Hydrauliksystemen überlegen und stellen eine wirtschaftliche Alternative zu diesen dar.

Im Einzelnen ist es vorgesehen, dass eine Zahnstange an einem Lager der Zustellwalze angreift und mit einem über einen Motor antreibbaren Ritzel derart zusammenwirkt, dass die Rotationsbewegung des Motors und des Ritzels in eine Linearbewegung der Zahnstange und damit des Lagers der Zustellwalze umgesetzt wird. Je nach Drehrichtung des Motors kann die Zustellwalze so unter Veränderung des Walzenspaltes auf eine ortsfeste Walze zu oder von dieser weg bewegt werden. Die korrespondierenden Zahnungen von Zahnstange und Ritzel sind dabei so ausgeführt, dass ein sehr exaktes Einstellen des Verstellweges möglich ist.

Gemäß einer Ausgestaltung der Erfindung weist die Zustellwalze an beiden Lagern jeweils ein erfindungsgemäßes Verstellsystem aus Zahnstange und Ritzel sowie zughörigem Antriebsmotor auf. Vorzugsweise sind die beiden Verstellsysteme dabei zentral ansteuerbar, so dass ein sehr genaues paralleles Verfahren der Walze und damit das Einstellen eines über die gesamte Walzenlänge einheitlich dimensionierten Walzenspaltes möglich ist.

Ein weiterer Vorschlag der Erfindung sieht vor, dass zwischen dem Ritzel und dem Motor des Verstellsystems ein Getriebe angeordnet ist. Durch ein derartiges Getriebe kann beispielsweise eine Übersetzung in den Antrieb eingebracht werden. Bei einer bevorzugten Ausführung der Erfindung ist das Getriebe als Planetengetriebe mit hoher Verdrehsteifigkeit und geringem Flankenspiel ausgebildet, wodurch besonders große Übersetzungen realisierbar sind.

Der das Ritzel antreibende Motor ist gemäß einer Ausgestaltung der Erfindung ein Servomotor. Servomotoren zeichnen sich neben kompakter Bauweise durch ein sehr gutes Regelverhalten aus und ermöglichen es, eine Zielposition bis auf wenige Mikrometer genau anzufahren.

Bei einer weiteren Ausführung der erfindungsgemäßen Walzenstuhlung sind drei Walzen vorgesehen, von denen mindestens zwei Walzen als Zustellwalzen ausgebildet sind. Bei einer solchen Anordnung lassen sich zwei Walzenspalte einstellen und eine beispielsweise zu glättende Folienbahn kann nacheinander durch die beiden Glättspalte geführt werden, wodurch besonders gute Ergebnisse im Glättprozess erzielt werden können.

Im Folgenden wird die Erfindung anhand eines Ausführungsbeispiels und unter Bezugnahme auf die beigefügten Zeichnungen näher erläutert. Es zeigen:
- Figur 1: eine schematische Draufsicht auf eine erfindungsgemäße Walzenstuhlung;
- Figur 2: eine schematische Seitenansicht der Walzenstuhlung aus Figur 1.

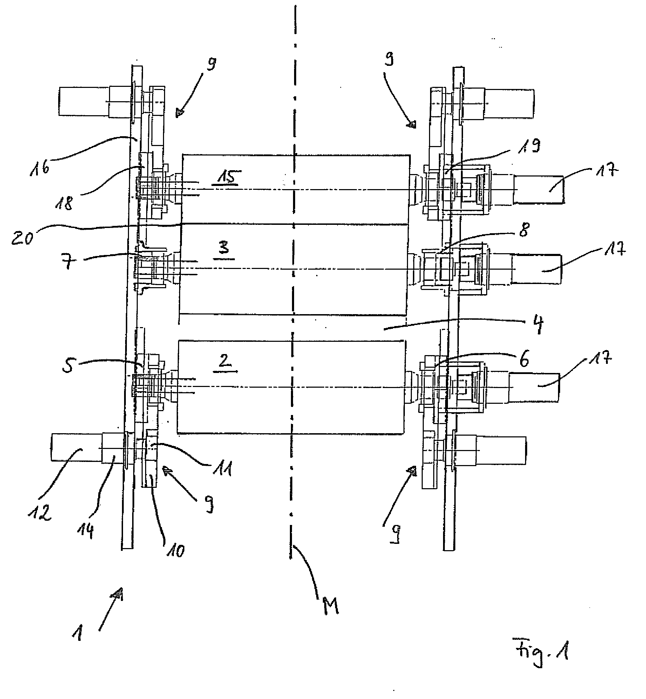

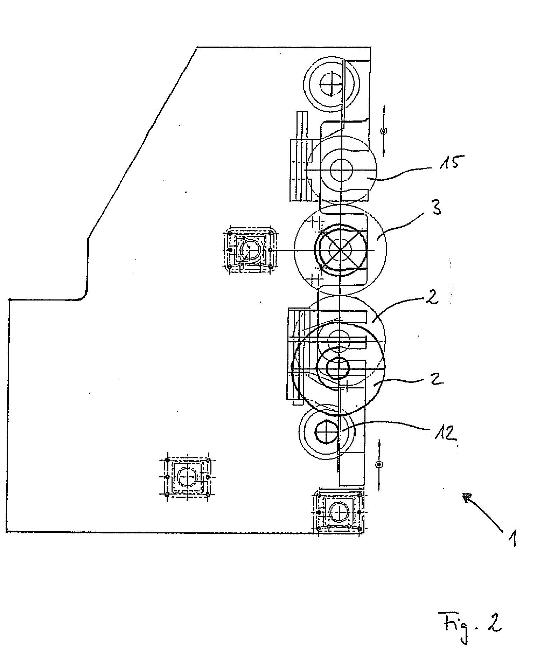

Die Figuren 1 und 2 zeigen eine im Ganzen mit 1 bezeichnete Walzenstuhlung eines Glättwerkes, welche drei parallel angeordnete Walzen 2, 3, 15 umfasst, die in einer Trägerkonstruktion 16 gehaltert sind. Alle drei Walzen 2, 3, 15 sind endseitig über Lager 5, 6, 7, 8, 18, 19 mit der Trägerkonstruktion 16 verbunden, in denen sie drehbar gelagert sind. Jede der drei Walzen 2, 3, 15 weist einen eigenen Antriebsmotor 17 auf, über welchen sie in Rotation versetzt werden kann.

Die mittig angeordnete Walze 3 ist eine ortsfeste Walze, während die beiden Walzen 2, 15 als Zustellwalzen ausgebildet sind. Die beiden Zustellwalzen sind jeweils beidseitig mit einem Verstellsystem 9 ausgestattet, über welches die jeweiligen Lager 5, 6, 18, 19 mitsamt der darin aufgenommenen Walzen 2, 15 entlang der Trägerkonstruktion 16 linear verschiebbar sind.

Durch Verschiebung der Lager 5, 6, 18, 19 kann zwischen den Walzen 2 und 3 ein Walzenspalt 4 und zwischen den Walzen 3 und 15 ein Walzenspalt 20 eingestellt werden.

Die nun folgende Beschreibung des Aufbaus und der Funktionsweise des Verstellsystems 9 beschränkt sich auf das in Figur 1 links unten dargestellte Verstellsystem 9 zur Verlagerung des Lagers 5 der Walze 2. Aufgrund der Symmetrie des Aufbaus der Walzenstuhlung gilt Entsprechendes für das am anderen Ende der Walze 2 angeordnete Verstellsystem 9 sowie für die beiden die Position der Walze 15 steuernden Verstellsysteme 9.

Das Verstellsystem 9 weist eine Zahnstange 10 sowie ein mit dieser zusammenwirkendes Ritzel 11 auf. Die Zahnstange 10 greift an dem Lager 5 an. Über einen Servomotor 12 sowie ein zwischengeschaltetes Planetengetriebe 14 ist das Ritzel 11 zur Rotation antreibbar, wodurch sodann die Zahnstange 10 und mit dieser das Lager 5 linear und geführt durch die Trägerkonstruktion 16 verschoben werden. Je nach Drehrichtung des Servomotors 12 erfolgt die Verschiebung auf die ortsfeste Walze 3 zu oder von dieser weg. Durch die Verwendung eines Servomotors ist es dabei möglich, eine gewünschte Position sehr exakt anzufahren.

Um die Walze 2 exakt parallel zu der ortsfesten Walze 3 verfahren und positionieren zu können, erfolgt der Antrieb der Verstellsysteme 9 für die Zustellbewegung der beiden Lager 5 und 6 synchron.

Bei der Herstellung von Glättwerksfolien wird nun ein in einer Plastifiziereinheit erzeugter und aus einem Breitschlitzwerkzeug austretender Schmeizestrom in ein Glättwerk gemäß Figur 1 eingeführt und dort zunächst über die Walze 2 geführt, dann durch den Walzenspalt 4 hindurchgefädelt und unter der Walze 3 hinweg durch den Walzenspalt 20 wieder über die Walze 15 geführt. An das Glättwerk schließt sich üblicherweise ein Wickler an, in dem die fertige Folie aufgewickelt wird. Die Walzen 2, 3, 15 des Glättwerkes werden zur Abkühlung des Schmelzestromes gekühlt.

In der in Figur 1 dargestellten Situation ist der Walzenspalt 4 weit geöffnet, was beispielsweise dem anfänglichen Einfädeln eines zu glättenden Schmelzestromes dient. Sobald der Schmelzestrom über die Walzen 2, 3, 15 geführt sowie durch die Walzenspalte 4, 20 gefädelt ist, kann der Walzenspalt 4 durch Verlagerung der Lager 5, 6 in der oben beschriebenen Weise verkleinert werden bis auf ein voreingestelltes, für den jeweiligen Glättprozess erforderliches Maß. Eine solche schmale Einstellung des Glättspaltes ist in Figur 1 am Beispiel des Walzenspaltes 20 zu erkennen. In der Seitenansicht von Figur 2 ist die als Zustellwalze ausgebildete Walze 2 in zwei durch eine entsprechende Verschiebung auseinander hervorgegangenen Positionen dargestellt.

Mit einer erfindungsgemäßen, einen Servomotor und ein Planetengetriebe aufweisenden Walzenstuhlung können je nach verwendetem Walzentyp Haltekräfte bis 500000 N und Verfahrkräfte bis 100000 N aufgebracht werden. Die auf diese Weise realisierbaren Verfahrwege liegen typischerweise zwischen 150 mm und 200 mm bei einer Positioniergenauigkeit zwischen 50 µm und 5 µm.

Der Vorzug der erfindungsgemäßen Walzenstuhlung mit elektromechanischem Verstellsystem liegt vor allem in der exakten Steuerbarkeit sowie der einfacheren Handhabung gegenüber einem hydraulischen System. Zudem weist das elektromechanische System eine kompaktere Bauweise und einen geringeren Verschleiß auf. Aufgrund der durch das erfindungsgemäße System möglichen genauen Positionierbarkeit der Zustellwalzen kann insbesondere auf zusätzliche Mess- und Einstelleinrichtungen zur Nachregelung des Walzenspaltes verzichtet werden, so dass sich durch den Einsatz des elektromechanischen Systems auch wirtschaftliche Vorteile ergeben.

## Patentansprüche

1. Walzenstuhlung (1), umfassend mindestens zwei Walzen (2,3), zwischen denen ein Walzenspalt (4) ausbildbar ist, wobei die Walzen (2,3) endseitig in Lagern (5,6,7,8) drehbar gelagert sind und mindestens eine der Walzen (2,3) als Zustellwalze ausgeführt ist und ein Verstellsystem (9) aufweist, mittels dessen die Lager (5, 6) der Zustellwalze unter Veränderung des Walzenspaltes (4) verlagerbar sind, **dadurch gekennzeichnet, dass** das Verstellsystem (9) eine Zahnstange (10) sowie ein mit dieser zusammenwirkendes Ritzel (11) aufweist, welches über einen Motor (12) antreibbar ist.

2. Walzenstuhlung (1) nach Anspruch 1, **dadurch gekennzeichnet, dass** die Zustellwalze an beiden Lagern (5,6) jeweils ein Verstellsystem (9) aufweist.

3. Walzenstuhlung (1) nach Anspruch 2, **dadurch gekennzeichnet, dass** die beiden Verstellsysteme (9) der Zustellwalze zentral ansteuerbar sind.

4. Walzenstuhlung (1) nach einem der Ansprüche 1 bis 3, **dadurch gekennzeichnet, dass** zwischen dem Ritzel (11) und dem Motor (12) des Verstellsystems (9) ein Getriebe (14) angeordnet ist.

5. Walzenstuhlung (1) nach Anspruch 4, **dadurch gekennzeichnet, dass** das Getriebe (14) als Planetengetriebe ausgebildet ist.

6. Walzenstuhlung (1) nach einem der Ansprüche 1 bis 5, **dadurch gekennzeichnet, dass** der Motor (12) ein Servomotor ist.

7. Walzenstuhlung (1) nach einem der Ansprüche 1 bis 6, **dadurch gekennzeichnet, dass** drei Walzen (2,3,15) vorgesehen sind, von denen mindestens zwei Walzen (2,15) als Zustellwalzen ausgebildet sind.
